# EUROPEAN PATENT SPECIFICATION

(11) **EP 1 043 185 B1**
(45) Date of publication and mention of the grant of the patent: **24.11.2004**
(21) Application number: 00105482.4
(22) Date of filing: 15.03.2000
(51) Int. Cl.: B60K 15/04

(54) **String-attached cap**
Mit einer Lasche befestigte Kappe
Bouchon avec patte d'attache

(30) Priority: 07.04.1999 US 287657; 22.10.1999 JP 30156799
(43) Date of publication of application: 11.10.2000
(73) Proprietor: Calsonic Kansei Corporation, Tokyo (JP)
(72) Inventor: Yamada, Tatsuo c/o Calsonic Kansei Corporation, Tokyo (JP); Araki, Shinji c/o Calsonic Kansei Corporation, Tokyo (JP); Asakura, Eiichi c/o Calsonic Kansei Corporation, Tokyo (JP)
(74) Representative: Grünecker, Kinkeldey, Stockmair & Schwanhäusser Anwaltssozietät

(56) References cited:
- EP-A- 0 827 914
- EP-A- 0 869 024
- US-A- 4 974 307
- US-A- 5 720 409
- PATENT ABSTRACTS OF JAPAN vol. 1998, no. 13, 30 November 1998 (1998-11-30) & JP 10 211821 A (CALSONIC CORP), 11 August 1998 (1998-08-11)
- PATENT ABSTRACTS OF JAPAN vol. 012, no. 014 (M-659), 16 January 1988 (1988-01-16) & JP 62 173321 A (NIFCO INC), 30 July 1987 (1987-07-30)

## Description

The present invention relates to a string-attached cap according to the preamble portions of either of claims 1 or 8, and particularly relates to a cap in which one end of an elongated coupling member is connected to the cap.

In a fuel tank of an automobile, a cap is, in general, connected to the fuel tank by means of an elongated coupling member to prevent the loss of the cap during re-fueling. As such string-attached caps, those disclosed in, for example, Japanese Patent Publications No. Hei. 3-295723 and Sho. 62-173321 or the like are known.

Fig. 21 shows the string-attached cap disclosed in Japanese Patent Publication No. Hei. 3-295723, and in this string-attached cap one end of a coupling member 13 is connected to a handle portion 5a of a cap 5 by means of a fixing member 1.

However, with such a conventional string-attached cap, since the coupling member 3 is connected to the cap 5 by means of the fixing member 1, there has been a problem in that the number of component parts increases, requiring a large number of steps in assembly in accordance with a structure of the fixing member.

A string-attached cap disclosed in U.S. Pat. No. 5,720,409 was developed to overcome these problems.

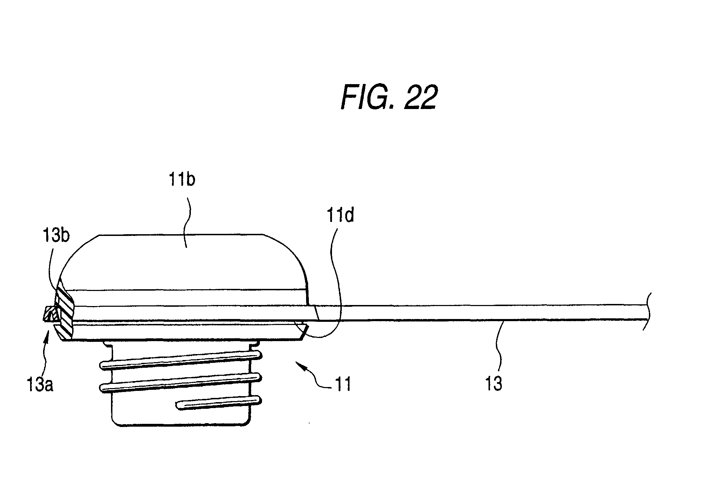

Fig. 22 shows this string-attached cap. This string-attached cap is arranged such that a coupling member 13, which is formed of flexible resin, has a ring part 13a formed integrally at one end thereof, and an engaging part 13b formed integrally with the inner periphery of the ring part 13a is rotatably engaged in an annular groove 11d formed in the outer periphery of a cap 11.

With this string-attached cap, since the ring part 13a of the coupling member 13 is inserted and fitted in the annular groove 11d formed in the cap 11, the coupling member 13 does not constitute an obstruction when the cap 11 is turned while gripping a handle portion 11b.

In addition, when the cap 11 is inserted into the ring portion 13a of the coupling member 13, the engaging part 13b at the inner periphery of the ring part 13a is elastically deformed, and if the cap 11 in this state is inserted up to the annular groove 11d, the engaging part 13b is restored to its original state and is engaged in the annular groove 11d, so that the number of assembling steps can be substantially reduced as compared with the conventional art.

However, with the above-described conventional string-attached cap, since a countermeasure against static electricity is not provided, at the time of removing the cap from the fuel tank, there is the risk of occurrence of spark discharge as static electricity charged in the human body is discharged through fingers and the like which came into contact with the cap. To resolve this spark charge, it is conceivable to form the string-attached cap of, for example, an electroconductive material and discharge the static electricity to the vehicle side. The electroconductive material can be constituted by, for example, an electroconductive resin; however, in the compounding of the electroconductive material which is mixed into it, there is the possibility that the following problem can be occur.

Namely, if the amount of the electroconductive material mixed is extremely small, electric conduction is lowered, and the discharge of static electricity does not take place completely, so that there are cases where the remaining static electricity causes secondary spark discharge. On the other hand, if the amount of the electroconductive material mixed is extremely large, although electric conduction is enhanced, there can arise cases in which the moment the human body comes into contact with the cap, the human body receives a large shock.

Further, from document JP 10-211821 A there is known a cap member as well as a coupling member as indicated above both being made from conductive resin, wherein said one resin, common to the cap member and the coupling member, is composed of an insulating polymer in which metal fibers, metal powder or graphite is mixed.

In view of the above, it is the objective of the present invention to provide a string-attached cap which is capable of discharging static electricity without imparting a shock to the human body and of positively preventing the occurrence of secondary spark discharge.

This objective is solved by a string-attached cap having the features of either of claims 1 or 8.

Further preferred embodiments are laid down in the respective dependent claims.

In the following, the present invention is explained in further detail with respect to the several embodiments thereof in conjunction with the accompanying drawings. In the accompanying drawings:
Fig. 1 is a side view illustrating the arrangement of a first embodiment;
Fig. 2 is a top view illustrating the arrangement of the first embodiment;
Fig. 3 is a cross-sectional view illustrating the arrangement of a ring part;
Fig. 4 is a perspective view illustrating a state in which the string-attached cap is disposed on a vehicle body;
Fig. 5 is a diagram illustrating results of surface resistance measured by varying the carbon contents in a coupling member and the cap, as well as an organoleptic evaluation;
Fig. 6 is a diagram illustrating a change over time of the amount of residual charge;
Fig. 7 is a diagram illustrating the relationship among the carbon contents, surface resistance, the amount of residual charge, and the organoleptic evaluation;
Fig. 8 is a top view of the coupling member illustrating the arrangement of a second embodiment;
Fig. 9 is a cross-sectional view illustrating the arrangement of a ring part of the coupling member;
Fig. 10 is a side view illustrating the arrangement of a third embodiment;
Fig. 11 is a cross-sectional view illustrating the arrangement of a ring part of the coupling member;
Figs. 12A and Fig. 12B are diagrams illustrating other examples of the arrangement of the cross section of a portion corresponding to an annular groove;
Fig. 13 is a perspective view illustrating a fourth embodiment;
Fig. 14 is a cross-sectional view illustrating a state in which the coupling member is fastened to a handle portion;
Fig. 15 is a perspective view illustrating a fifth embodiment;
Fig. 16 is a cross-sectional view illustrating a state in which the coupling member is fastened to the handle portion;
Fig. 17 is a perspective view illustrating a sixth embodiment;
Fig. 18 is a cross-sectional view illustrating a state in which the coupling member is fastened to a ring member;
Fig. 19 is a perspective view illustrating a seventh embodiment;
Fig. 20 is a cross-sectional view illustrating a state in which the coupling member is fastened to the ring member;

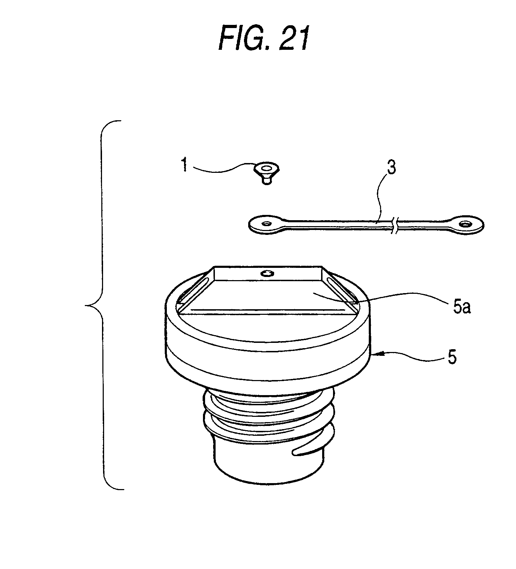

Fig. 21 is a perspective view illustrating a conventional string-attached cap; and
Fig. 22 is a side view illustrating another conventional string-attached cap.

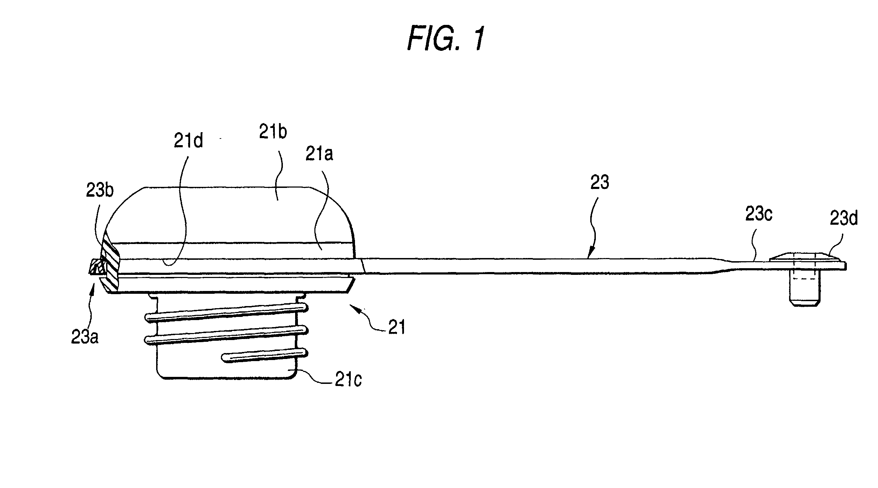

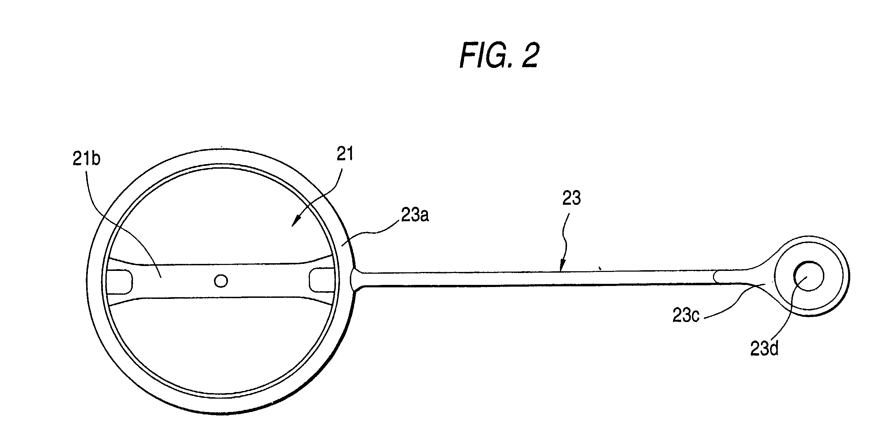

Figs. 1 and 2 show a first embodiment of the string-attached cap. Fig. 1 is a side view, and Fig. 2 is a top view. In the drawings reference numeral 21 denotes a cap for a fuel tank of an automobile.

This cap 21 is formed of an electroconductive resin, and a handle portion 21b is formed on one side of a cap body 21a, and a threaded part 21c on the other side thereof.

An annular groove 21d is formed in the outer periphery of the cap body 21a.

Reference numeral 23 denotes an elongated flexible coupling member formed of an electroconductive resin. An annular ring part 23a is formed integrally at one end of the coupling member 23.

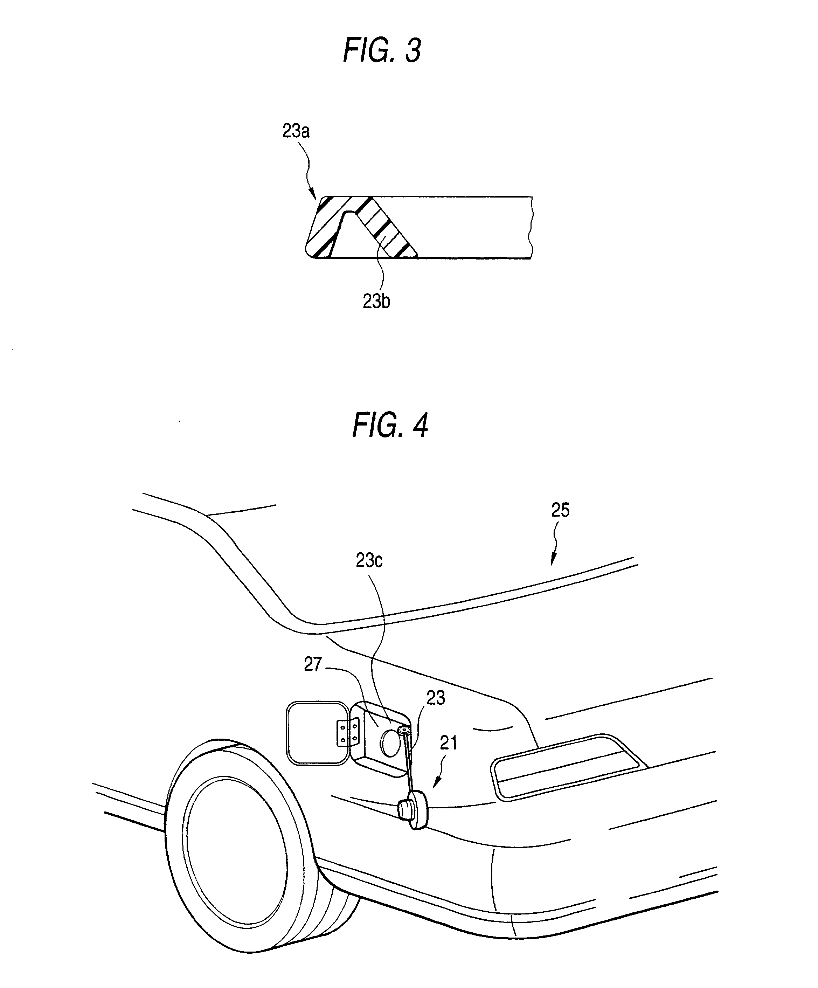

As shown in Fig. 3, this ring part 23a in its cross-sectional shape is formed in an inverse V-shape, and its inner peripheral side is formed as an engaging part 23b.

This engaging part 23b is rotatably engaged in the annular groove 21d formed in the outer periphery of the cap body 21a.

It should be noted that an attaching portion 23c is formed integrally at the other end of the coupling member 23, and an attaching member 23d for attachment to the vehicle is formed in this attaching portion 23c.

In the above-described string-attached cap, if the cap body 21a is inserted into the ring part 23a of the coupling member 23, the engaging part 23b at the inner periphery of the ring part 23a is elastically deformed and its diameter is enlarged. If, in this diameter-enlarged and deformed state, the cap body 21a is further pushed in up to the annular groove 21d, the engaging part 23b is restored to its original state and is engaged in the annular groove 21d.

As shown in Fig. 4, the string-attached cap thus constructed is used as the attaching portion 23c formed at the other end of the coupling member 23 is rotatably fixed to a vehicle body 27 of an automobile 25 by means of the attaching member 23d.

In this embodiment, the electroconductive resin for forming the cap 21 and the coupling member 23 is formed by mixing carbon powder (carbon black) into a flexible insulating polymer.

The content of the carbon powder to be mixed in is determined such that when the human body charged with static electricity comes into contact with the handle portion 21b, no shock is imparted to the hand or fingers, and secondary spark discharge does is not caused by the amount of residual charge. To determine this content, the amount of residual charge was measured by conducting an organoleptic evaluation in a number of combinations by varying the respective contents in the cap 21 and the coupling member 23.

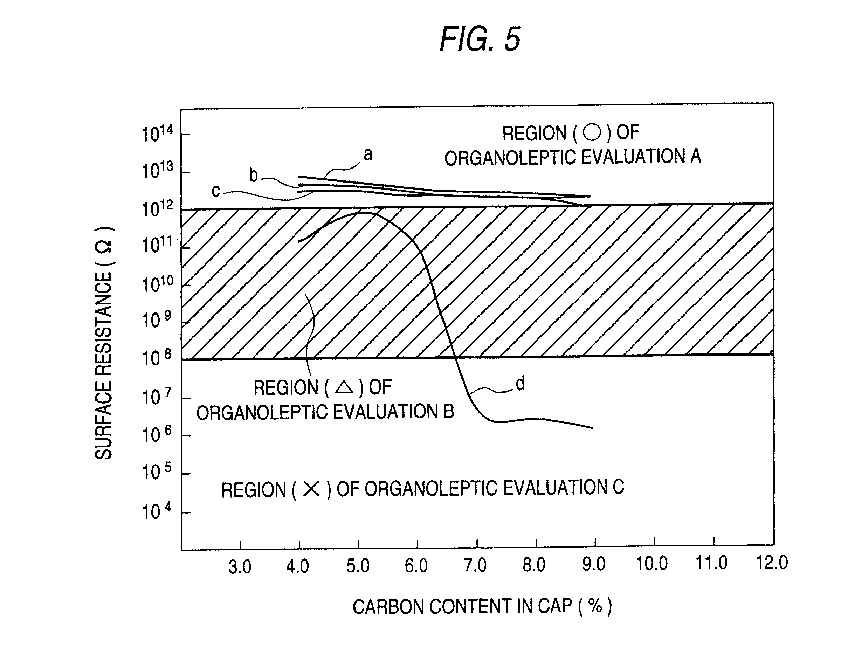

Fig. 5 is a diagram illustrating the results of surface resistance and organoleptic evaluation measured by varying the content of carbon powder in the coupling member 23 and the cap 21. Curves a, b, c, and d respectively show surface resistance values measured by varying its content in the cap 21 from 4 % to 9% when its content (weight ratio) in the coupling member 23 was set to 3%, 4%, 5%, and 6%.

The organoleptic evaluation was conducted with respect to combinations of the contents at three levels, including A in which no shock is felt, B in which a slight shock is felt, and C in which a strong shock is felt. Consequently, as shown in Fig. 5, in the region where the surface resistance was 10⁸ Ω or less, a strong shock at C level (X) was felt. Meanwhile, in the region from 10⁸ Ω to 10¹² Ω, the level was B level (Δ), and in only the region higher than or equal to 10¹² Ω, the level was A level (○) in which no shock was felt. Accordingly, in order not to feel a shock, it is necessary to render the surface resistance higher than or equal to 10¹² Ω.

On the other hand, if the surface resistance is large, the discharge of static electricity becomes difficult, and static electricity remains even after the discharge. If the amount of this residual charge is large, the risk of secondary spark discharge occurs. Accordingly, an experiment on discharge was conducted in a combination 1 in which the content in the cap 21 was set to 4% and the content in the coupling member 23 was set to 3%, a combination 2 in which the content in the cap 21 was set to 5% and the content in the coupling member 23 was set to 4%, and a combination 3 in which the content in the cap 21 was set to 9% and the content in the coupling member 23 was set to 6%. The condition of discharge was that the human body charged with 9.0 kV static electricity touches the handle 21b for two seconds.

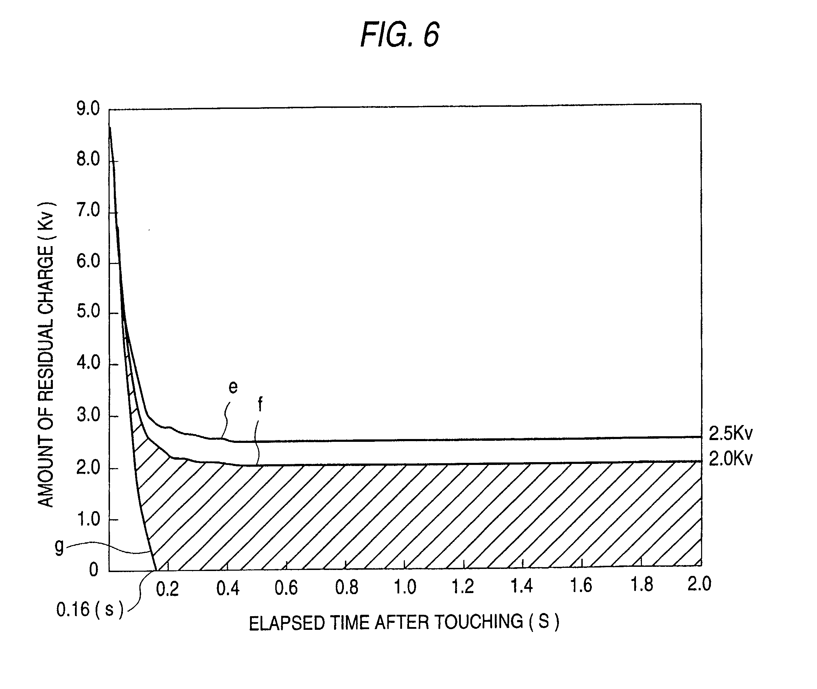

Fig. 6 is a diagram illustrating a change over time of the amount of residual charge. Curves *e*, *f*, and *g*, are discharge curves showing the amounts of residual charge in the combination 1, combination 2, and combination 3, respectively.

According to Fig. 6, in the combinations 1 and 2, the amount of residual charge stabilized at 2.5 kV and 2.0 kV, respectively, after the lapse of 0.4 second upon touching, as shown by the curves *e* and *f*. In the combination 3, the amount of residual charge was 0 after the lapse of 0.16 second at shown by the curve *g*. Since the critical voltage of the spark discharge in the air is 2 kV (referring to "safety guide for static electricity" published by Technology Institution of Industrial Safety in Japan, 1988), if the surface resistance is set to a level less than or equal to that of the combination 2 in which the amount of residual charge stabilizes at 2.0 kV, the amount of residual charge becomes 2.0 kV or less, so that the secondary spark charge becomes difficult to occur. The surface resistance of the combination 2 is 5.30 X 10¹² Ω.

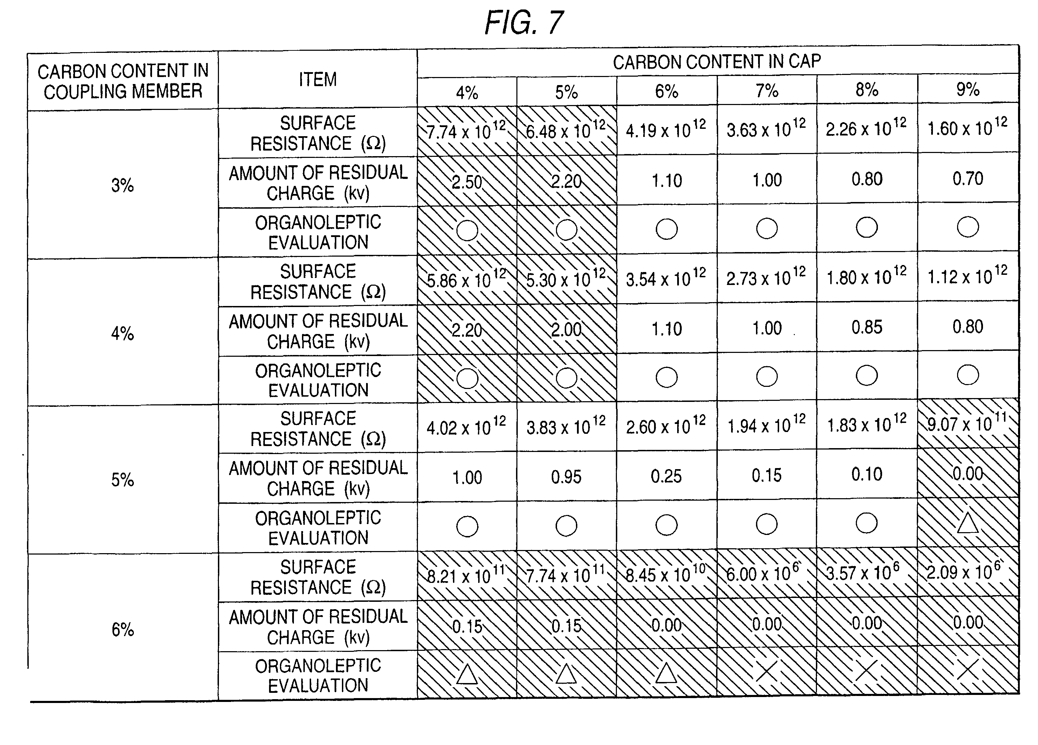

Fig. 7 is a diagram which shows the relationship among the carbon contents, surface resistance, the amount of residual charge, and the organoleptic evaluation.

In combinations in which the carbon powder content of the cap 21 is in the range of from 4% to 5% and the carbon powder content of the coupling member 23 is in the range of from 3% to 4%, the amount of residual charge becomes 2.0 kV or more, and there is the risk of secondary discharge, so that such cases are excluded from the combinations of the contents.

On the other hand, in combinations in which the content in the coupling member 23 is 6% and the content in the cap 21 is in the range of from 4% to 9% and in combinations in which the content in the coupling member 23 is 5% and the content in the cap 21 is 9%, since the surface resistance is less than 10¹² Ω, a shock is imparted when the human body touches the handle portion 21b, so that these combinations are not used, either.

In combinations in which the content in the coupling member 23 is in the range of from 3% to 4% and the content in the cap 21 is in the range of from 6% to 9% or in combinations in which the content in the coupling member 23 is 5% and the content in the cap 21 is in the range of from 4% to 8%, since no shock is imparted to the human body at the time of discharging static electricity, and the amount of residual charge does not cause the secondary spark discharge. Therefore, these ranges are set as the ranges of carbon powder contents in the cap 21 and the coupling member 23 in accordance with this embodiment.

As the insulating polymer which is mixed with the carbon powder, it is possible to cite a polyamide such as nylon 66, a polyamide elastomer, polyester, a polyester elastomer, and the like.

Among others, as the material for forming the coupling member 23, a material having high bending resistance is selected. Thus, it is possible to obtain a coupling member 23 which is flexible, maintains high bending properties even at a low temperature, and does not become damaged due to fatigue caused by repeated deformation accompanying the opening and closing of the cap 21.

As one example of a polymer which meets this bending resistance, it is desirable to use a polyester elastomer constituted by a block copolymer of a hard segment and a soft segment which respectively have the structures shown below (tradename: "HYTREL" made by DUPONT-TORAY CO., LTD.). The point to be noted in this block copolymer is that the soft segment contains a polyether component.

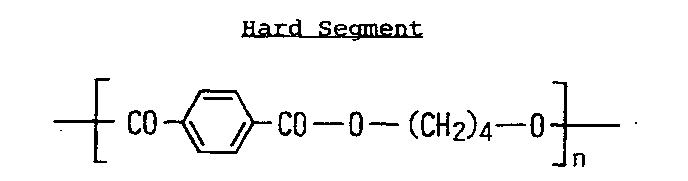

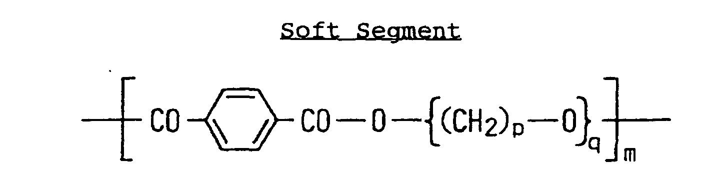

Ester linkage is used as the basic structure of the hard segment and the soft segment, but the present invention is not limited to the same, and amide linkage may be adopted as the basic structure of the two segments. In this case as well, the soft segment should desirably contain a polyether component.

In general, due to the mixing in of carbon powder, the flexible polymer has the tendency of becoming hard and brittle, so that the mixing in of carbon powder is not desirable for the coupling member. However, since the aforementioned resin is adopted, even if carbon powder is mixed in, it is possible to obtain sufficient bending resistance.

In addition, as for the electroconductive resin for forming the cap 21 and the coupling member 23, resins of the same type or different types may be adopted.

In the string-attached cap constructed as described above, since the cap 21 and the coupling member 23 are formed of flexible electroconductive resin, static electricity occurring in the cap 21 and the coupling member 23 is allowed to gradually escape to the vehicle body side through the coupling member 23, with the result that it is possible to easily and positively prevent the cap 21 and the coupling member 23 from becoming electrically charged.

In addition, as the human body charged with static electricity touches the cap 21 during re-fueling, it is possible to allow the static electricity to escape to the vehicle body side without feeling a shock before opening the cap. In addition, even if the human body touches the opened cap again, the secondary spark discharge does not occur.

In the above-described string-attached cap, since the ring part 23a of the coupling member 23 is inserted and fitted in the annular groove 21d formed in the cap body 21a, the coupling member 23 does not constitute an obstruction when the cap 21 is turned while gripping the handle portion 21b. In addition, the cap 21 is freely rotatable with respect to the ring part 23a, so that the coupling member 23 does not constitute an obstruction.

Since the coupling member 23 has high bending resistance, even if the cap 21 is opened and closed repeatedly, the coupling member 23 does not become damaged due to fatigue.

Further, if the cap body 21a is inserted into the ring part 23a of the coupling member 23, the engaging part 23b at the inner periphery of the ring part 23a is elastically deformed, and if, in this state, the cap body 21a is merely pushed in up to the annular groove 21d, the engaging part 23b is restored to its original state and is engaged in the annular groove 21d. Therefore, the number of assembling steps can be substantially reduced as compared with the conventional art.

In addition, in the above-described string-attached cap, since the cross section of the ring part 23a is formed in a V-shape, and the inner periphery is formed as the engaging part 23b, it is possible to allow the elastic deformation of the engaging part 23b to take place easily and positively when the coupling member 23 is attached to the cap 21.

In this embodiment, the cap 21 constitutes a capping member, and the electroconductive resin for forming the cap 21 constitutes a first electroconductive resin.

The electroconductive resin for forming the coupling member 23 constitutes a second electroconductive resin.

Next, a description will be given of a second embodiment.

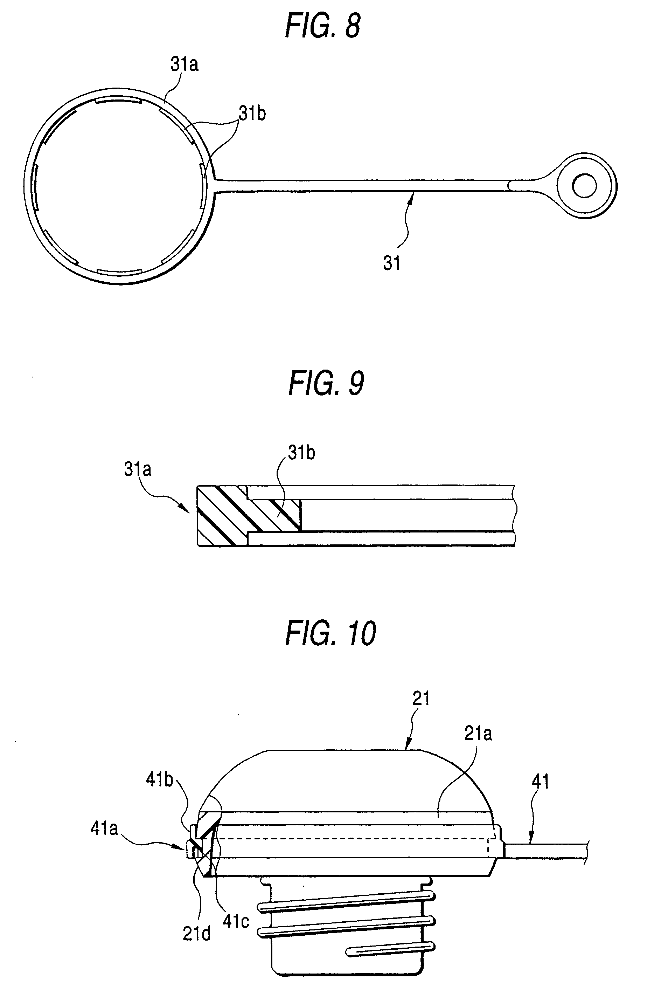

Fig. 8 is a top view illustrating a coupling member, and Fig. 9 is a cross-sectional view of a ring part of the coupling member. In this embodiment, as shown in Fig. 8, a coupling member 31 is formed such that its engaging part is formed by a plurality of protrusions 31b which protrude inwardly from a ring part 31a at predetermined angles. This coupling member 31 is formed of an electroconductive resin which contains carbon powder with the same content as that for the coupling member 23 in accordance with the first embodiment.

If the cap body 21a (see Fig. 1) is inserted into the ring part 31a, the protruding portions 31b serving as the engaging part are elastically deformed in a direction away from the inserting side. If, in this state, the cap body 21a is pushed in up to the annular groove 21d, the protrusions 31b are restored to their original state and are engaged in the annular groove 21d.

The other arrangements, including the compositions of the electroconductive resins and carbon contents for the cap and the like, are similar to those of the first embodiment.

Thus, since the surface resistance between the cap 21 and the coupling member 31 becomes similar to that of the first embodiment, so that advantages similar to those of the first embodiment can be obtained.

In addition, in this embodiment, since the engaging part is formed by the plurality of protrusions 31b which protrude inwardly from the ring part 31a at predetermined angles, the elastic deformation of the engaging part can be allowed to take place easily and positively in the same way as in the first embodiment.

The electroconductive resin for forming the coupling member 31 constitutes a second electroconductive resin.

Next, a description will be given of a third embodiment.

In this embodiment, the coupling member is provided with a further different arrangement.

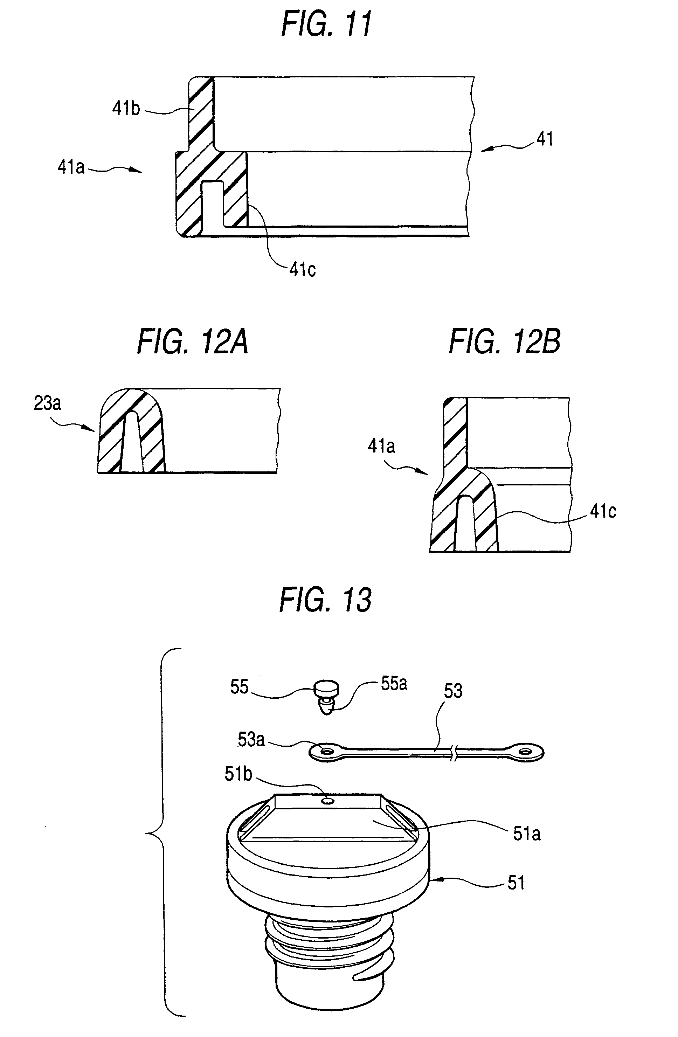

Fig. 10 is a side view of the third embodiment, and Fig. 11 is a cross-sectional view illustrating the arrangement of a ring part of the coupling member.

An annular protruding portion 41b protruding in the vicinity of the annular groove 21d at the outer periphery of the cap body 21a of the cap 21 is formed integrally with a ring part 41a of a coupling member 41. The annular protruding portion 41b and an engaging part 41c are formed in such a manner as to project in mutually opposite directions.

The cross section of the portion corresponding to the annular groove including the engaging part 41c is formed in a rectangular shape (U-shape).

Although not particularly illustrated, the attaching portion (23c) and the attaching member (23d) are provided at the other end of the coupling member 41 in the same way as the coupling member 23 in the first embodiment.

The coupling member 41 is formed of an electroconductive resin which contains carbon powder with the same content as that for the coupling member 23 in accordance with the first embodiment.

The other arrangements, including the compositions of the electroconductive resins and carbon contents for the cap and the like, are similar to those of the first embodiment.

In this embodiment as well, in the same way as in the first embodiment advantages can be obtained in that it is possible to allow the static electricity to be discharged without feeling a shock, and the secondary spark discharge does not occur after the discharge.

In addition, in this string-attached cap, when a force acts between the cap 21 and the coupling member 41, the annular protruding portion 41b abuts against the outer periphery of the cap 21, and the aforementioned force is alleviated by the annular protruding portion 41b, so that the force acting on the engaging part 41c becomes small. Consequently, the resilient deformation of the engaging part 41c becomes small, and the engaging part 41c is prevented from coming off the annular groove 21d. Further, since the force acting between the cap 21 and the coupling member 41 is dispersed to the annular protruding portion 41b and the engaging part 41c, an advantage can be obtained in that the rotation of the cap 21 becomes smooth.

It should be noted that although, in the above-described first embodiment, a description has been given of the example in which the cross section of the ring part 23a of the coupling member 23 is formed substantially in a V-shape, the present invention is not limited such an example, and the cross section of the ring part 23a of the coupling member 23 may be formed substantially in a U-shape, as shown in Fig. 12A.

In addition, although, in the above-described third embodiment, a description has been given of the example in which the cross section of the ring part 41a of the coupling member 41 is formed in a rectangular shape, the present invention is not limited to such an example. For example, as shown in Fig. 12B, the cross section of the portion corresponding to the annular groove including the engaging part 41c may be formed substantially in a U-shape.

The electroconductive resin for forming the coupling member 41 constitutes the second electroconductive resin.

Next, a description will be given of a fourth embodiment.

Fig. 13 is a perspective view illustrating the arrangement of the fourth embodiment. In this embodiment, one end of a coupling member 53 is connected to a handle portion 51a of a cap 51 through a fastening member 55.

The cap 51 and the coupling member 53 are formed of electroconductive resins containing carbon powder with the same contents as those for the cap 21 and the coupling member 23 in accordance with the first embodiment, and.the fastening member 55 is formed of the same electroconductive resin as that of the cap 51.

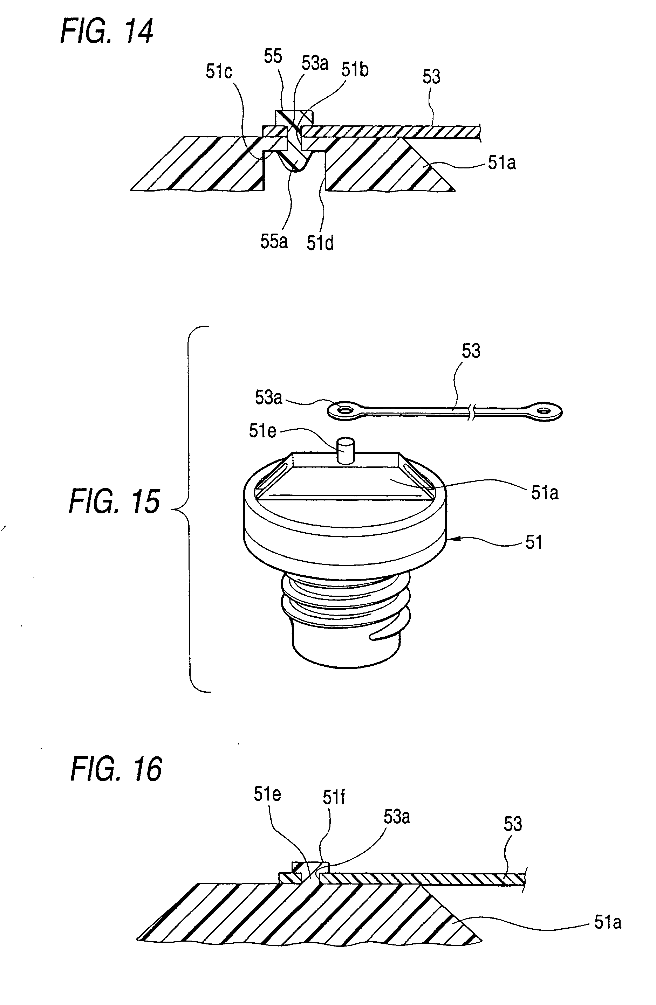

Fig. 14 is a cross-sectional view illustrating a state in which the coupling member is fastened to the handle portion. An attaching hole 51b for insertion of a retaining portion 55a formed at a tip of the fastening member 55 is formed in the handle portion 51a of the cap 51, and a retaining hole 51d is formed via a stepped portion 51c.

In a state in which the retaining portion 55a of the fastening member 55 is inserted in through hole 53a formed at one end of the coupling member 53, the retaining portion 55a is inserted in the attaching hole 51b in the handle portion 51a, thereby fastening the coupling member 53 to the handle portion 51a.

The other arrangements of the coupling member 53 are similar to those of the first embodiment.

In this embodiment, the cap 51 constitutes the capping member, and the electroconductive resin for forming the cap 51 constitutes the first electroconductive resin.

The electroconductive resin for forming the coupling member 53 constitutes the second electroconductive resin.

The electroconductive resin for forming the fastening member 55 constitutes a third electroconductive resin.

Next, a description will be given of a fifth embodiment.

Fig. 15 is a perspective view illustrating the arrangement of the fifth embodiment.

This embodiment differs from the fourth embodiment in that a fastening member 51e is formed integrally with the handle portion 51a of the cap 51.

This cap 51 is formed of an electroconductive resin containing carbon powder with the same content as that of the cap 21 in accordance with the first embodiment.

In this embodiment, as shown in Fig. 16, in a state in which the fastening member 51e is fitted in the through hole 53a formed at one end of the coupling member 53, the diameter of a distal end of the fastening member 51 is enlarged by means of heat or ultrasonic waves so as to form a calked portion 51f, thereby fastening the coupling member 53 to the handle portion 51a.

In this embodiment, static electricity can be discharged without imparting a shock to the human body, and the secondary spark discharge can be prevented in the same way as in the fourth embodiment.

In this embodiment, the cap 51 constitutes the capping member, and the electroconductive resin for forming the cap 51 constitutes the first electroconductive resin.

The electroconductive resin for forming the fastening member 51e constitutes the third electroconductive resin.

Next, a description will be given of a sixth embodiment.

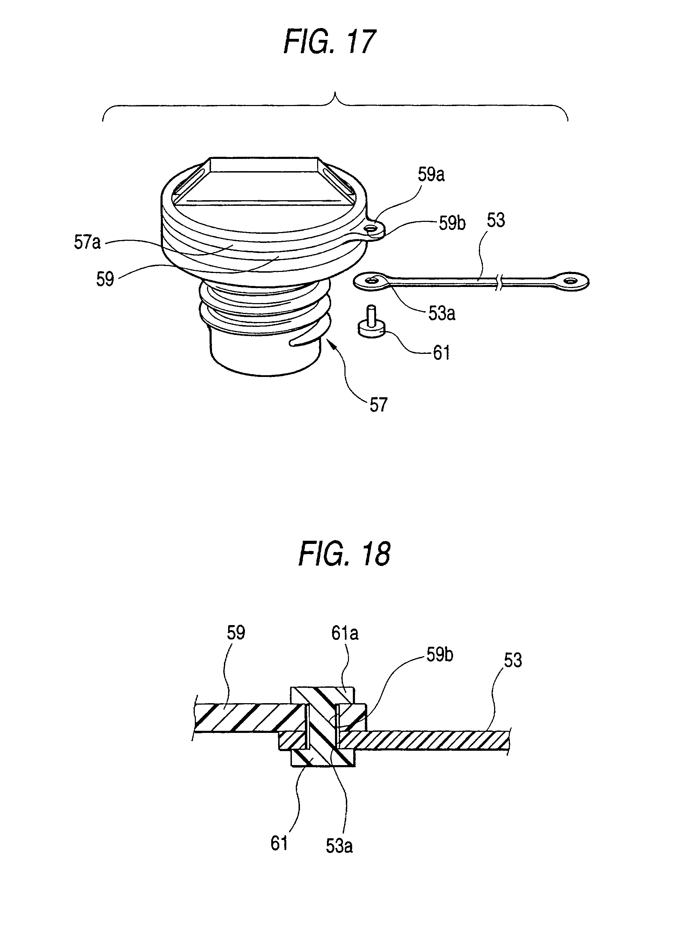

Fig. 17 is a perspective view illustrating the arrangement of the sixth embodiment.

In this embodiment, a ring member 59 is rotatably engaged in the outer periphery of a cap body 57a of a cap 57. A projecting portion 59a projecting outwardly is formed on the ring member 59, and an attaching hole 59b is formed in this projecting portion 59a.

The cap 57 is formed of an electroconductive resin containing carbon powder with the same content as that of the cap 21 in accordance with the first embodiment.

The ring member 59 and a fastening member 61 are formed of the same electroconductive resin as that of the cap 57.

In the coupling between the coupling member 53 and the ring member 59, as shown in Fig. 18, in a state in which a tip portion of the rivet-like fastening member 61 is inserted in the through hole 53 a formed at one end of the coupling member 53, the tip portion of the fastening member 61 is inserted in the attaching hole 59b of the ring member 59, and the diameter of the tip portion of the fastening member 61 is enlarged by means of heat or ultrasonic waves so as to form a calked portion 61a, thereby fastening the coupling member 53 to the ring member 59.

The other arrangements are similar to those of the first embodiment.

In the string-attached cap of this embodiment, in the same way as in the above-described embodiments, since the coupling member 53, the fastening member 61, and the ring member 59 are formed of electroconductive resin containing carbon powder having predetermined contents, it is possible to discharge static electricity without imparting a shock to the human body, and the secondary spark discharge due to the amount of residual charge does not occur after the discharge.

In this embodiment, the cap 57 constitutes the capping member, and the electroconductive resin for forming the cap 57 constitutes the first electroconductive resin.

The electroconductive resin for forming the coupling member 53 constitutes the second electroconductive resin.

The electroconductive resin for forming the fastening member 61 constitutes the third electroconductive resin.

The electroconductive resin for forming the ring part constitutes a fourth electroconductive resin.

Next, a description will be given of a seventh embodiment.

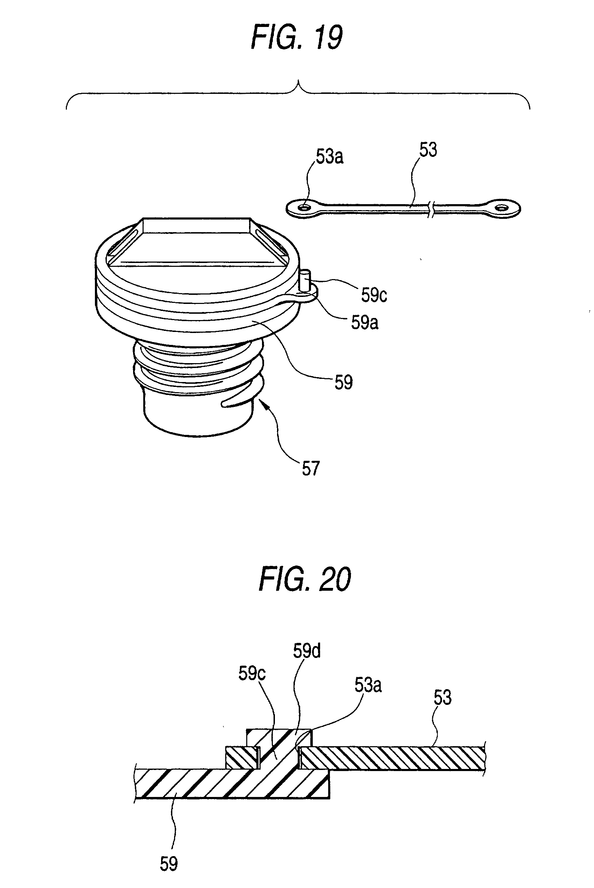

Fig. 19 is a perspective view illustrating the arrangement of the seventh embodiment. This embodiment differs from the sixth embodiment in that a fastening member 59c is formed integrally with the projecting portion 59a of the ring member 59.

This ring member 59 is formed of the same electroconductive resin as that of the cap 57.

In this embodiment, as shown in Fig. 20, in a state in which the fastening member 59c is fitted in the through hole 53a formed at one end of the coupling member 53, the diameter of a distal end of the fastening member 59c is enlarged by means of heat or ultrasonic waves so as to form a calked portion 59d, thereby fastening the coupling member 53 to the ring part 59.

The other arrangements, including the compositions of the electroconductive resins, are similar to those of the sixth embodiment.

with the string-attached cap in accordance with this embodiment as well, it is possible to obtain advantages similar to those of the sixth embodiment.

In this embodiment, the electroconductive resin for forming the fastening member 59c constitutes the third electroconductive resin.

The electroconductive resin for forming the ring member 59 constitutes the fourth electroconductive resin.

It should be noted that although, in the foregoing embodiments, a description has been given of the example in which the electroconductive resin is formed by mixing carbon powder into an insulating polymer, the present invention is not limited such an embodiment. For example, the electroconductive resin may be formed by mixing metal fibers such as stainless steel fibers and copper fibers, or metal powders, carbon fibers, or the like.

As described above, with the string-attached cap since the electroconductive resin for forming each member of the string-attached cap is formed by mixing carbon powder, carbon fibers, or metal fibers with an insulating polymer, it is possible to increase the strength of the coupling member. In particular, since an insulating polymer of a block copolymer including a hard segment and a soft segment containing a polyether component is used as the insulating polymer for the second electroconductive resin for forming the coupling member, the coupling member is flexible and maintains high bending properties even at a low temperature, and does not become damaged due to fatigue caused by repeated deformation accompanying the opening and closing of the capping member. Therefore, the service life of the string-attached cap can be prolonged.

In addition, as for the coupling between the capping member and the coupling member, in a case where an arrangement is provided such that an annular groove is formed in the capping member, and the ring part of the coupling member is fitted and inserted in the annular groove, the coupling member does not constitute an obstruction when the capping member is turned. In the assembling process in which the coupling member is fitted to the capping member, if the capping member is inserted into the ring part of the coupling member, the engaging part at the inner periphery of the ring part is elastically deformed. Therefore, if, in this state, the capping member is pushed in, the engaging part is restored to its original state and is engaged in the annular groove. Therefore, the number of assembling steps can be substantially reduced as compared with the conventional art.

Since the surface resistance from the capping member to the vehicle is set in the range greater than or equal to 1 X 10¹² Ω and less than 5.30 X 10¹² Ω, the capping member can be maintained at the same potential as that of the vehicle body. At the same time, when the human body is brought into contact with the capping member, static electricity charged in the human body passes through the coupling member and is allowed to escape to the vehicle body side without imparting a shock to the human body. In addition, it is possible to prevent the occurrence of secondary spark discharge due to the amount of residual charge.

In addition, the arrangement provided is such that the content of the carbon powder being set in a range of from 4% to 9% as weight percentage for the first electroconductive resin and in a range of from 3% to 5% as weight percentage for the second electroconductive resin, and a combination in which the content thereof in the first electroconductive resin is 9% and the content thereof in the second electroconductive resin is 5% as well as combinations in which the content thereof in the first electroconductive resin is in a range of from 4% to 5% and the content thereof in the second electroconductive resin is in a range of from 3% to 4% are excluded. Therefore, the surface resistance from the capping member to the vehicle can be set to be greater than or equal to 1 X 10¹² Ω and less than 5.30 X 10¹² Ω.

The description above discloses (amongst others) a string-attached cap comprising: a capping member formed of a first electroconductive resin; and an elongated coupling member having one end connected to the capping member, the elongated coupling member being formed of a second electroconductive resin and being flexible, and the string-attached cap being used with another end of the coupling member coupled to a vehicle, wherein the first electroconductive resins and the second electroconductive resin are formed such that surface resistance from the capping member to the vehicle is set to be greater than or equal to 1 X 10¹² Ω and less than 5.30 X 10¹² Ω. (in the following referred to as first aspect)

Therein, since the capping member and the elongated coupling member are coupled to each other and are respectively formed of a first electroconductive resin and a second electroconductive resin, the string-attached cap can be maintained at the same potential as that of the vehicle body.

In addition, since the first electroconductive resin and the second electroconductive resin are formed such that surface resistance from the capping member to the vehicle is set to be greater than or equal to 1 X 10¹² Ω and less than 5.30 X 10¹² Ω, when the human body is brought into contact with the capping member and static electricity charged in the human body is discharged to the vehicle side, a discharge shock is not imparted to the hand or fingers, and secondary spark discharge does not occur since the amount of residual discharge after the discharge becomes that of a critical value of spark discharge.

The description further discloses a string-attached cap comprising: a capping member formed of a first electroconductive resin; an elongated coupling member formed of a second electroconductive resin and being flexible; and a fastening member formed of a third electroconductive resin for fastening one end of the coupling member to the capping member, the string-attached cap being used with another end of the coupling member coupled to a vehicle, wherein the first electroconductive resins, the second 5 electroconductive resin, and the third electroconductive resin are formed such that surface resistance from the capping member to the vehicle is set to be greater than or equal to 1 X 10¹² Ω and less than 5.30 X 10¹² Ω. (in the following referred to as second aspect).

Therein, since the capping member and the elongated coupling member are coupled to each other by the fastening member, and the members are respectively formed of the first electroconductive resin, the second electroconductive resin, and the third electroconductive resin, the string-attached cap can be maintained at the same potential as that of the vehicle body.

Since the first electroconductive resin and the second electroconductive resin are formed such that surface resistance from the capping member to the vehicle is set to be greater than or equal to 1 X 10¹² Ω and less than 5.30 X 10¹² Ω, when discharge of static electricity is allowed to take place in the same way as in the invention according to the first aspect, advantages are obtained in that no discharge shock is imparted to the human body, and that the secondary spark discharge does not occur after the discharge.

In addition, since, when the capping member is opened or closed, relative movement takes place at the portion where the capping member and the coupling member are coupled to each other, advantages can also be obtained in that the deformation of the coupling member can be held down to a small level, and that the opening and closing of the capping member can be effected smoothly.

It still further discloses a string-attached cap comprising: a capping member formed of a first electroconductive resin; a ring member engaged in an outer periphery of the capping member; an elongated coupling member formed of a second electroconductive resin which is flexible; and a fastening member formed of a third electroconductive resin for fastening one end of the coupling member to the ring member, the ring member being formed of a fourth electroconductive resin, the string-attached cap being used with another end of the coupling member coupled to a vehicle, wherein the first electroconductive resins, the second electroconductive resin, the third electroconductive resin, and the fourth electroconductive resin are formed such that surface resistance from the capping member to the vehicle is set to be greater than or equal to 1 X 10¹² Ω and less than 5.30 X 10¹² Ω. (in the following referred to as third aspect).

Therein, the ring member is engaged in the outer periphery of the capping member, the ring member and the elongated coupling member are coupled to each other by the fastening member, and the members are respectively formed of the first electroconductive resin, the second electroconductive resin, and the third electroconductive resin, and the fourth electroconductive resin. Therefore, the string-attached cap can be maintained at the same potential as that of the vehicle body.

Since the first electroconductive resin, the second electroconductive resin, the third electroconductive resin, and the fourth electroconductive resin are formed such that surface resistance from the capping member to the vehicle is set to be greater than or equal to 1 X 10¹² Ω and less than 5.30 X 10¹² Ω, when discharge of static electricity is allowed to take place in the same way as in the above-described invention, advantages are obtained in that no shock is imparted to the human body, and that the secondary spark discharge due to the amount of residual charge does not occur.

In addition, since the capping member can be rotated freely with respect to the ring member, advantages can be obtained in that when the capping member is opened or closed, the deformation of the coupling member can be held down to a small level, and that opening and closing can be effected smoothly.

The description further discloses a string-attached cap comprising: a capping member formed of a first electroconductive resin and having an annular groove formed in its outer periphery; and an elongated coupling member formed of a second electroconductive resin and being flexible, the coupling member having a ring member formed integrally at one end thereof, an engaging part which is formed integrally with an inner periphery of the ring part being rotatably engaged in the annular groove of the capping member, the string-attached cap being used with another end of the coupling member coupled to a vehicle, wherein the first electroconductive resins and the second electroconductive resin are formed such that surface resistance from the capping member to the vehicle is set to be greater than or equal to 1 X 10¹² Ω and less than 5.30 X 10¹² Ω. (in the following referred to as fourth aspect).

Therein, the annular groove is formed in the outer periphery of the capping member, the elongated coupling member has the ring part formed integrally at one end thereof, the engaging part formed integrally with the inner periphery of the ring part is rotatably engaged in the annular groove of the capping member and is coupled to the capping member, and the members are respectively formed of the first electroconductive resin and the second electroconductive resin. Therefore, the string-attached cap can be maintained at the same potential as that of the vehicle body.

Since the first electroconductive resin and the second electroconductive resin are respectively formed such that surface resistance from the capping member to the vehicle is set to be greater than or equal to 1 X 10¹² Ω and less than 5.30 X 10¹² Ω, when discharge of static electricity is allowed to take place in the same way as in the above-described invention, advantages are obtained in that no shock is imparted to the human body, and that the secondary spark discharge does not occur after the discharge.

In addition, since the capping member can be rotated freely with respect to the ring member of the coupling member, when the capping member is opened or closed, the deformation of the coupling member can be held down to a small level, and opening and closing can be effected smoothly.

In the assembling process in which the coupling member is attached to the capping member, since the coupling member is flexible, if the capping member is inserted into the ring part of the coupling member, the engaging part at the inner periphery of the ring part is elastically deformed, and if, in this state, the capping member is pushed in up to the annular groove, the engaging part is restored to its original state and is engaged in the annular groove. Therefore, the number of assembling steps can be substantially reduced as compared with the conventional art.

Moreover, all of the afore-mentioned electroconductive resins might be each formed of a mixture of an insulating polymer and one of carbon powders, carbon fibers and metal fibers in the string-attached cap discussed above in respect of the first to fourth aspects. (In the following referred to as fifth aspect)

Therein, since the electroconductive resin is formed by mixing carbon powder, carbon fibers, or metal fibers with an insulating polymer, it is possible to increase the strength of the coupling member while obtaining predetermined surface resistance.

Furthermore, the second electroconductive resin for forming the coupling member might have its insulating component consisting of an insulating polymer of a block copolymer including a hard segment and a soft segment, the soft segment containing a polyether component in the string-attached cap discussed above in respect of the fifth aspect. (In the following referred to as sixth aspect)

Therein, since an insulating polymer of a block copolymer including a hard segment and a soft segment containing a polyether component is used as the insulating polymer for forming the coupling member, advantages are obtained in that high bending properties are obtained even at a low temperature, and the coupling member does not become damaged due to fatigue caused by repeated deformation accompanying the opening and closing of the capping member.

The first lectroconductive resin for forming the capping member and the second electroconductive resin for forming the coupling member might be each formed of a mixture of an insulating polymer and carbon powder, a content of the carbon powder being set in a range of from 4% to 9% as weight percentage for the first electroconductive resin and in a range of from 3% to 5% as weight percentage for the second electroconductive resin, a combination in which the content thereof in the first electroconductive resin is 9% and the content thereof in the second electroconductive resin is 5% as well as combinations in which the content thereof in the first electroconductive resin is in a range of from 4% to 5% and the content thereof in the second electroconductive resin is in a range of from 3% to 4% are being excluded in the string-attached cap as discussed above in respect of fifth and sixth aspects. (In the following referred to as seventh aspect)

Therein, the content of the carbon powder being set in a range of from 4% to 9% as weight percentage for the first electroconductive resin and in a range of from 3% to 5% as weight percentage for the second electroconductive resin, and a combination in which the content thereof in the first electroconductive resin is 9% and the content thereof in the second electroconductive resin is 5% as well as combinations in which the content thereof in the first electroconductive resin is in a range of from 4% to 5% and the content thereof in the second electroconductive resin is in a range of from 3% to 4% are excluded. Therefore, the surface resistance from the capping member to the vehicle can be set to be greater than or equal to 1 X 10¹² Ω and less than 5.30 X 10¹² Ω.

The description above also discloses a string-attached cap comprising: a capping member formed of a first electroconductive resin; and an elongated coupling member having one end connected to the capping member, the elongated coupling member being formed of a second electroconductive resin and being flexible, wherein the first electroconductive resin and the second electroconductive resin are each formed of a mixture of an insulating polymer and one of carbon powders, carbon fibers and metal fibers, and the insulating polymer of the second electroconductive resin is formed of an insulating polymer of a block copolymer including a hard segment and a soft segment, the soft segment containing a polyether component. (In the following referred to as eighth aspect)

Therein, since the electroconductive resin for forming each of the members is formed by mixing carbon powder, carbon fibers, or metal fibers with an insulating polymer, it is possible to increase the strength of the members.

In particular, since an insulating polymer of a block copolymer including a hard segment and a soft segment containing a polyether component is used as the insulating polymer for the second electroconductive resin for forming the coupling member, it is possible to obtain a coupling member which is flexible, maintains high bending properties even at a low temperature, and does not become damaged due to fatigue caused by repeated deformation accompanying the opening and closing of the capping member.

It still further discloses a string-attached cap comprising: a capping member formed of a first electroconductive resin; an elongated coupling member formed of a second electroconductive resin and being flexible; and a fastening member formed of a third electroconductive resin for fastening one end of the coupling member to the capping member, wherein the first electroconductive resin, the second electroconductive resin and the third electroconductive resin are each formed of a mixture of an insulating polymer and one of carbon powders, carbon fibers and metal fibers, and the insulating polymer of the second electroconductive resin is formed of an insulating polymer of a block copolymer including a hard segment and a soft segment, the soft segment containing a polyether component. (In the following referred to as ninth aspect)

Therein, in the same way as in the eighth aspect, since the electroconductive resin for forming each of the members is formed by mixing carbon powder, carbon fibers, or metal fibers with an insulating polymer, it is possible to increase the strength of the members.

Since an insulating polymer of a block copolymer including a hard segment and a soft segment containing a polyether component is used for the second electroconductive resin for forming the coupling member, it is possible to obtain a coupling member which is flexible, maintains sufficient bending properties even at a low temperature, and does not become damaged due to fatigue caused by repeated deformation accompanying the opening and closing of the capping member.

Also, it discloses a string-attached cap comprising: a capping member formed of a first electroconductive resin; a ring member engaged in an outer periphery of the capping member; an elongated coupling member formed of a second electroconductive resin which is flexible; and a fastening member formed of a third electroconductive resin for fastening one end of the coupling member to the ring member, wherein the ring member is formed of a fourth electroconductive resin, and the first electroconductive resin, the second electroconductive resin, the third electroconductive resin and the fourth electroconductive resin are each formed of a mixture of an insulating polymer and one of carbon powders, carbon fibers and metal fibers, and the insulating polymer of the second electroconductive resin is formed of an insulating polymer of a block copolymer including a hard segment and a soft segment, the soft segment containing a polyether component. (In the following referred to as tenth aspect)

Therein, in the same was as in the eighth or ninth aspect, since the electroconductive resin for forming each of the members is formed by mixing carbon powder, carbon fibers, or metal fibers with an insulating polymer, it is possible to increase the strength of the members. Since an insulating polymer of a block copolymer including a hard segment and a soft segment containing a polyether component is used for the second electroconductive resin for forming the coupling member, it is possible to obtain a coupling member which is flexible, maintains sufficient bending properties even at a low temperature, and does not become damaged due to fatigue caused by repeated deformation accompanying the opening and closing of the capping member.

In addition, it discloses there is provided a string-attached cap comprising: a capping member formed of a first electroconductive resin and having an annular groove formed in its outer periphery; and an elongated coupling member formed of a second electroconductive resin and being flexible, the coupling member having a ring member formed integrally at one end thereof, an engaging part which is formed integrally with an inner periphery of the ring part being rotatably engaged in the annular groove of the capping member, the string-attached cap being used with another end of the coupling member coupled to a vehicle, wherein the first electroconductive resin and the second electroconductive resin are each formed of a mixture of an insulating polymer and one of carbon powders, carbon fibers and metal fibers, and the insulating polymer of the second electroconductive resin is formed of an insulating polymer of a block copolymer including a hard segment and a soft segment, the soft segment containing a polyether component. (In the following referred to as eleventh aspect)

Therein, in the same way as in the eighth to tenth aspects, since the electroconductive resin for forming each of the members is formed by mixing carbon powder, carbon fibers, or metal fibers with an insulating polymer, it is possible to increase the strength of the members. Since an insulating polymer of a block copolymer including a hard segment and a soft segment containing a polyether component is used for the second'electroconductive resin for forming the coupling member, it is possible to obtain a coupling member which is flexible, maintains sufficient bending properties even at a low temperature, and does not become damaged due to fatigue caused by repeated deformation accompanying the opening and closing of the capping member.

## Claims

1. A string-attached cap comprising
a capping member (21,51,57) formed of electroconductive resin, and
an elongated coupling member (23,31,53) having one end connected to said capping member (21,51,57), said elongated coupling member (23,31,53) being formed of electroconductive resin and being flexible, and said string-attached cap (21,51,57) being used with another end of said coupling member (23,31,53) coupled to a vehicle,
**characterized in that**
the caping member (21, 51, 57) is formed of a first electroconductive resin, the coupling member (23, 31, 53) is formed of a second electroconductive resin,
said first electroconductive resin and said second electroconductive resin are formed such that surface resistance from said capping member (21,51,57) to said vehicle is set to be greater than or equal to 1 X 10¹² Ω and less than 5.30 X 10¹² Ω.

2. A string-attached cap according to claim 1, **characterized by** a fastening member (55,51e) formed of a third electroconductive resin for fastening one end of said coupling member (53) to said capping member (51), said string-attached cap (51) being used with another end of said coupling member (53) coupled to a vehicle, wherein said third electrocondcutive resin is formed such that surface resistance from said capping member (51) to said vehicle is set to be greater than or equal to 1 x 10¹² Ω and less than 5.30 x 10¹² Ω.

3. A string-attached cap according to claim 1, **characterized by** a ring member (59) engaged in an outer periphery of said capping member (57), and by a fastening member (61) formed of a third electroconductive resin for fastening one end of said coupling member (53) to said ring member (59), said ring member (59) being formed of a fourth electrocondcutive resin, said string-attached cap (57) being used with another end of said coupling member (53) coupled to a vehicle, wherein said third electroconductive resin and said fourth electrocondcutive resin are formed such that surface resistance from said capping member to said vehicle is set to be greater than or equal to 1 X 10¹² Ω and less than 5.30 X 10¹² Ω.

4. A string-attached cap according to claim 1 or 3, **characterized in that** the capping member (21) formed of the first electroconductive resin has an annular groove (21d) formed in its outer periphery, and **in that** the elongated coupling member (23) formed of the second electroconductive resin and being flexible has a ring member (23a) formed integrally at one end thereof, an engaging part (23b) which is formed integrally with an inner periphery of said ring part (23a) being rotatably engaged in said annular groove (21 d) of said capping member (21), said string-attached cap (21) being used with another end of said coupling member (23) coupled to a vehicle.

5. A string-attached cap according to at least one of the preceding claims 1 to 4, **characterized in that** all of said electroconductive resins are each formed of a mixture of an insulating polymer and one of carbon powders, carbon fibers and metal fibers.

6. A string-attached cap according to claim 5, **characterized in that** said second electroconductive resin for forming said coupling member (23,31,53) has its insulating component consisting of an insulating polymer of a block copolymer including a hard segment and a soft segment, said soft segment containing a polyether component.

7. A string-attached cap according to claim 5 or 6, **characterized in that** said first electroconductive resin for forming said capping member (21,51,57) and said second electroconductive resin for forming said coupling member (23,31,53) are each formed of a mixture of an insulating polymer and carbon powder, a content of said carbon powder being set in a range of from 4% to 9% as weight percentage for said first electroconductive resin and in a range of from 3% to 5% as weight percentage for said second electrocondcutive resin, a combination in which the content thereof in said first electroconductive resin is 9% and the content thereof in said second electroconductive resin is 5% as well as combinations in which the content thereof in said first electrocondcutive resin is in a range of from 4% to 5% and the content thereof in said second electroconductive resin is in a range of from 3% to 4% are being excluded.

8. A string-attached cap comprising
a capping member (21,51,57) formed of electroconductive resin, and
an elongated coupling member (23,31,53) having one end connected to said capping member (21,51,57), said elongated coupling member (23,31,53) being formed of electroconductive resin and being flexible,
wherein resin is formed of a mixture of an insulating polymer and one of carbon powders, carbon fibers and metal fibers,
**characterized in that**
the caping member (21, 51, 57) is formed of a first electroconductive resin, the coupling member (23, 31, 53) is formed of a second electroconductive resin, said insulating polymer of said second electroconductive resin is formed of an insulating polymer of a block copolymer including a hard segment and a soft segment, said soft segment containing a polyether component.

9. A string-attached cap according to claim 8, **characterized by** a fastening member (55,51e) formed of a third electroconductive resin for fastening one end of said coupling member (53) to said capping member (51), wherein said third electroconductive resin is formed of a mixture of an insulating polymer and one of carbon powders, carbon fibers and metal fibers.

10. A string-attached cap according to claim 8, **characterized by** a ring member (59) engaged in an outer periphery of said capping member (57), and by a fastening member (61) formed of a third electroconductive resin for fastening one end of said coupling member (53) to said ring member (59), wherein said ring member (59) is formed of a fourth electroconductive resin, said third electroconductive resin and said fourth electroconductive resin are each formed of a mixture of an insulating polymer and one of carbon powders, carbon fibers and metal fibers.

11. A string-attached cap according to claim 8 or 10, **characterized in that** the capping member (21) formed of the first electroconductive resin has an annular groove (21d) formed in its outer periphery, and **in that** the elongated coupling member (23) formed of the second electroconductive resin and being flexible has a ring member (23a) formed integrally at one end thereof, an engaging part (23b) which is formed integrally with an inner periphery of said ring part (23a) being rotatably engaged in said annular groove (21d) of said capping member (21), said string-attached cap (21) being used with another end of said coupling member (23) coupled to a vehicle.

## Patentansprüche

1. Schnurverbundene Kappe, die aufweist
ein Kappenteil (21, 51, 57), gebildet aus elektrisch- leitendem Kunststoff, und
ein langgestrecktes Kupplungsteil (23, 31, 53), das ein Ende hat, verbunden mit dem Kappenteil (21, 51, 57), wobei das langgestreckte Kupplungsteil (23, 31, 53) aus elektrisch- leitendem Kunststoff gebildet und flexibel ist und die schnurverbundene Kappe (21, 51, 57) mit einem weiteren Ende des Kupplungsteiles (23, 31, 53), gekuppelt mit einem Fahrzeug, verwendet wird,
**dadurch gekennzeichnet, dass**
das Kappenteil (21, 51, 57) aus einem ersten elektrisch- leitenden Kunststoff gebildet ist, das Kupplungsteil (23, 31, 53) aus einem zweiten elektrisch- leitenden Kunststoff gebildet ist,
der erste elektrisch- leitende Kunststoff und der zweite elektrisch- leitende Kunststoff derart gebildet sind, dass der Oberflächenwiderstand von dem Kappenteil (21, 51, 57), zu dem Fahrzeug festgelegt ist, größer als oder gleich zu 1 X 10¹²Ω und geringer als 5.30 x 10¹² Ω zu sein.

2. Schnurverbundene Kappe nach Anspruch 1, **gekennzeichnet durch** ein Befestigungsteil (55, 51 e), gebildet aus einem dritten elektrisch- leitenden Kunststoff zum Befestigen eines Endes des Kupplungsteiles (53) an dem Kappenteil (51),
wobei die schnurverbundene Kappe (51) mit dem weiteren Ende des Kupplungsteiles (53), gekuppelt mit einem Fahrzeug, verwendet wird, wobei der dritte elektrisch- leitende Kunststoff derart gebildet ist, dass der Oberflächenwiderstand von dem Kappenteil (51), zu dem Fahrzeug festgelegt ist, größer als oder gleich zu 1 X 10¹² Ω und geringer als 5.30 X 10¹² Ω zu sein.

3. Schnurverbundene Kappe nach Anspruch 1, **gekennzeichnet durch** ein Ringteil (59), im Eingriff in einem Außenumfang des Kappenteiles (57), und **durch** ein Befestigungsteil (61), gebildet aus einem dritten elektrisch- leitenden Kunststoff zum Befestigen eines Endes des Kupplungsteiles (53) an dem Ringteil (59), wobei das Ringteil aus einem vierten elektrisch- leitenden Kunststoff gebildet ist, die schnurverbundene Kappe (57) mit einem weiteren Ende des Kupplungsteiles (53), gekuppelt mit einem Fahrzeug, verwendet wird, wobei der dritte elektrisch- leitende Kunststoff und der vierte elektrisch- leitende Kunststoff derart gebildet sind, dass der Oberflächenwiderstand von dem Kappenteil (51) zu dem Fahrzeug festgelegt ist, größer als oder gleich zu 1 X 10¹² Ω und geringer als 5.30 X 10¹² Ω zu sein.

4. Schnurverbundene Kappe nach Anspruch 1 oder 3, **dadurch gekennzeichnet, dass** das Kappenteil (21), gebildet aus dem ersten elektrisch- leitenden Kunststoff, eine ringförmige Nut (21d) hat, gebildet in ihrem Außenumfang, und dadurch, dass das langgestreckte Kupplungsteil (23), gebildet aus dem zweiten elektrisch- leitenden Kunststoff und das flexibel ist, ein Ringteil (23a) hat, an einem Ende desselben einstückig gebildet, ein Eingriffsteil (23b), das mit einem Innenumfang des Ringteiles (23a), das in der Ringnut (21 d) des Kappenteiles (21) drehbar im Eingriff ist, einstückig gebildet ist, wobei die schnurverbundene Kappe mit einem weiteren Ende des Kupplungsteiles (23), gekuppelt mit dem Fahrzeug, verwendet wird.

5. Schnurverbundene Kappe nach zumindest einem der vorhergehenden Ansprüche 1 bis 4, **dadurch gekennzeichnet, dass** alle der elektrisch- leitenden Kunststoffe jeweils aus einem Gemisch aus einem isolierenden Polymer und einem von Kohlenstoffpulver, Kohlenstofffasern oder Metallfasern gebildet sind.

6. Schnurverbundene Kappe nach Anspruch 5, **dadurch gekennzeichnet, dass** der zweite elektrisch- leitende Kunststoff zum Bilden des Kupplungsteiles (23, 31, 53) eine isolierende Komponente hat, die aus einem isolierenden Polymer eines Block- Copolymers, das ein hartes Segment und ein weiches Segment hat, wobei das weiche Segment eine Polyetherkomponente enthält.

7. Schnurverbundene Kappe nach Anspruch 5 oder 6, **dadurch gekennzeichnet, dass** der erste elektrisch- leitende Kunststoff zum Bilden des Kappenteiles (21, 51, 57) und der zweite elektrisch- leitende Kunststoff zum Bilden des Kupplungsteiles (23, 31, 53) jeweils aus einem Gemisch eines isolierenden Polymers und Kohlenstoffpulver gebildet sind, wobei ein Gehalt des Kohlenstoffpulvers in einen Bereich von 4% bis 9% als Gewichtsprozentsatz für den ersten elektrisch- leitenden Kunststoff, und in einen Bereich von 3% bis 5% als Gewichtsprozentsatz für den zweiten elektrisch- leitenden Kunststoff festgelegt ist, eine Kombination, in der der Gehalt desselben in dem ersten elektrisch- leitenden Kunststoff 9% ist und der Gehalt desselben in dem zweiten elektrisch- leitenden Kunststoff 5% ist, sowie Kombinationen, in denen der Gehalt desselben in dem ersten elektrischleitenden Kunststoff in dem Bereich von 4% bis 5% ist und der Gehalt desselben in dem zweiten elektrisch- leitenden Kunststoff in einem Bereich von 3% bis 4% ist, werden ausgeschlossen.

8. Schnurverbundene Kappe, mit
einem Kappenteil (21, 51, 57), gebildet aus elektrisch- leitendem Kunststoff, und ein langgestrecktes Kupplungsteil (23, 31, 53), das ein Ende verbunden mit dem Kappenteil (21, 51, 57) hat, das langgestreckte Kupplungsteil (23, 31, 53) aus elektrisch- leitendem Kunststoff und flexibel gebildet ist,
wobei der Kunststoff aus einem Gemisch eines isolierenden Polymers und einem aus Kohlenstoffpulver, Kohlenstofffasern oder Metallfasern besteht,
**dadurch gekennzeichnet, dass**
das Kappenteil (21, 51, 57) aus einem ersten elektrisch- leitenden Kunststoff gebildet ist, das Kupplungsteil (23, 31,53) aus einem zweiten elektrisch- leitenden Kunststoff gebildet ist, das isolierende Polymer des zweiten elektrisch- leitenden Kunststoffes aus einem isolierenden Polymer eines Block- Copolymers gebildet ist, das ein Hartsegment und ein Weichsegment enthält, wobei das Weichsegment eine Polyetherkomponente enthält.

9. Schnurverbundene Kappe nach Anspruch 8, **gekennzeichnet durch** ein Befestigungsteil (55, 51 e), gebildet aus einem dritten elektrisch- leitenden Kunststoff zum Befestigen eines Endes des Kupplungsteiles (53) mit dem Kappenteil (51), wobei der dritte elektrisch- leitende Kunststoff aus einem Gemisch eines isolierenden Polymers und einem aus Kohlenstoffpulver, Kohlenstofffasern oder Metallfasern besteht.

10. Schnurverbundene Kappe nach Anspruch 8, **gekennzeichnet durch** ein Ringteil (59), im Eingriff in einem Außenumfang des Kappenteiles (57) und **durch** ein Befestigungsteil (61), gebildet aus einem dritten elektrisch- leitenden Kunststoff zum Befestigen eines Endes des Kupplungsteiles (53) an dem Ringteil (59), wobei das Ringteil (59) aus einem vierten elektrisch- leitenden Kunststoff gebildet ist, der dritte elektrisch- leitende Kunststoff und der vierte elektrisch- leitende Kunststoff jeweils aus einem Gemisch eines isolierenden Polymers und einem aus Kohlenstoffpulver, Kohlenstofffasern oder Metallfasern besteht.

11. Schnurverbundene Kappe nach Anspruch 8 oder 10, **dadurch gekennzeichnet, dass** das Kappenteil (21), gebildet aus dem ersten elektrisch- leitenden Kunststoff, eine Ringnut (21d) hat, gebildet in seinem Außenumfang, und dadurch, dass das langgestreckte Kupplungsteil (23), gebildet aus dem zweiten elektrisch- leitenden Kunststoff und das flexibel ist, ein Ringteil (23a) hat, einstückig an einem Ende desselben gebildet, ein Eingriffsteil (23b), das mit einem Innenumfang des Ringteiles (23a) drehbar im Eingriff in der Ringnut (21d) des Kappenteiles (21) ist, einstückig gebildet ist, wobei die schnurverbundene Kappe mit einem weiteren Ende des Kupplungsteiles (23) , gekuppelt mit einem Fahrzeug, verwendet wird.

## Revendications

1. Bouchon avec patte d'attache, comprenant :
un élément de capuchon (21, 51, 57) formé de résine électroconductrice, et
un élément d'accouplement allongé (23, 31, 53) ayant une extrémité connectée audit élément de capuchon (21, 51, 57), ledit élément d'accouplement allongé (23, 31, 53) étant formé de résine électroconductrice et étant flexible, et ledit bouchon avec patte d'attache (21, 51, 57) étant utilisé avec une autre extrémité dudit élément d'accouplement (23, 31, 53) accouplée à un véhicule,
**caractérisé en ce que** :
l'élément de capuchon (21, 51, 57) est formé d'une première résine électroconductrice et l'élément d'accouplement (23, 31, 53) est formé d'une seconde résine électroconductrice,
ladite première résine électroconductrice et ladite seconde résine électroconductrice sont formées de telle façon que la résistance de surface dudit élément de capuchon (21, 51, 57) vis-à-vis dudit véhicule est fixée à une valeur supérieure ou égale à 1 X 10¹² Ω et inférieure à 5,30 X 10¹² Ω.

2. Bouchon avec patte d'attache selon la revendication 1, **caractérisé par** un élément de fixation (55, 51e) formé d'une troisième résine électroconductrice pour fixer une extrémité dudit élément d'accouplement (53) sur ledit élément de capuchon (51), ledit bouchon avec patte d'attache (51) étant utilisé avec une autre extrémité dudit élément d'accouplement (53) accouplée à un véhicule, dans lequel ladite troisième résine électroconductrice est formée de telle façon que la résistance de surface dudit élément de capuchon (51) vis-à-vis dudit véhicule est fixée à une valeur supérieure ou égale à 1 x 10¹² Ω et inférieure à 5,30 x 10¹² Ω.

3. Bouchon avec patte d'attache selon la revendication 1, **caractérisé par** un élément annulaire (59) engagé dans une périphérie extérieure dudit élément de capuchon (57) et par un élément de fixation (61) formé d'une troisième résine électroconductrice pour fixer une extrémité dudit élément d'accouplement (53) audit élément annulaire (59), ledit élément annulaire (59) étant formé d'une quatrième résine électroconductrice, ledit bouchon avec patte d'attache (57) étant utilisé avec une autre extrémité dudit élément d'accouplement (53) accouplée à un véhicule, dans lequel ladite troisième résine électroconductrice et ladite quatrième résine électroconductrice sont formées de telle façon que la résistance de surface dudit élément de capuchon vis-à-vis dudit véhicule est fixée à une valeur supérieure ou égale à 1 X 10¹² Ω et inférieure à 5,30 X 10¹² Ω.

4. Bouchon avec patte d'attache selon l'une ou l'autre des revendications 1 et 3, **caractérisé en ce que** l'élément de capuchon (21) formé de la première résine électroconductrice comporte une gorge annulaire (21d) formée dans sa périphérie extérieure, et **en ce que** l'élément d'accouplement allongé (23) formé de la seconde résine électroconductrice et étant flexible comprend un élément annulaire (23a) formé de façon intégrale à l'une de ses extrémités, une partie d'engagement (23b) qui est formée de manière intégrale avec une périphérie intérieure de ladite partie annulaire (23a) étant engagée en rotation dans ladite gorge annulaire (21b) dudit élément de capuchon (21), ledit bouchon avec patte d'attache (21) étant utilisé avec une autre extrémité dudit élément d'accouplement (23) accouplée à un véhicule.

5. Bouchon avec patte d'attache selon l'une au moins des revendications précédentes 1 à 4, **caractérisé en ce que** toutes lesdites résines électroconductrices sont formées chacune d'un mélange d'un polymère isolant et d'un produit choisi parmi les poudres de carbone, les fibres de carbone, et les fibres de métal.

6. Bouchon avec patte d'attache selon la revendication 5, **caractérisé en ce que** la seconde résine électroconductrice pour former ledit élément d'accouplement (23, 31, 53) est telle que son composant isolant est constitué par un polymère isolant d'un copolymère-bloc incluant un segment dur et un segment tendre, ledit segment tendre contenant un composant polyéther.

7. Bouchon avec patte d'attache selon l'une ou l'autre des revendications 5 et 6, **caractérisé en ce que** ladite première résine électroconductrice pour former ledit élément de capuchon (21, 51, 57) et ladite seconde résine électroconductrice pour former ledit élément d'accouplement (23, 31, 53) sont formées chacune d'un mélange d'un polymère isolant et de poudre de carbone, la teneur de ladite poudre de carbone étant choisie dans une plage de 4 % à 9 %, exprimée en pourcentage en poids pour ladite première résine électroconductrice, et dans une plage de 3 % à 5 % exprimée en pourcentage en poids pour ladite seconde résine électroconductrice, une combinaison dans laquelle la teneur de ladite poudre de carbone dans ladite première résine électroconductrice est de 9 % et sa teneur dans ladite seconde résine électroconductrice est de 5 %, ainsi que des combinaisons dans lesquelles la teneur de ladite poudre de carbone dans ladite première résine électroconductrice est dans une plage de 4 % à 5 % et sa teneur dans ladite seconde résine électroconductrice est dans une plage de 3 % à 4 % étant exclues.

8. Bouchon avec patte d'attache, comprenant :
un élément de capuchon (21, 51, 57) formé de résine électroconductrice, et
un élément d'accouplement allongé (23, 31, 53) ayant une extrémité connectée audit élément de capuchon (21, 51, 57), ledit élément d'accouplement allongé (23, 31, 53) étant formé de résine électroconductrice et étant flexible,
dans lequel la résine est formée d'un mélange d'un polymère isolant et d'un produit parmi les poudres de carbone, les fibres de carbone et les fibres de métal,
**caractérisé en ce que** l'élément de capuchon (21, 51, 57) est formé d'une première résine électroconductrice, l'élément d'accouplement (22, 31, 53) est formé d'une seconde résine électroconductrice,
ledit polymère isolant de ladite seconde résine électroconductrice est formé d'un polymère isolant d'un copolymère bloc incluant un segment dur et un segment tendre, ledit segment tendre contenant un composant polyéther.

9. Bouchon avec patte d'attache selon la revendication 8, **caractérisé par** un élément de fixation (55, 51e) formé d'une troisième résine électroconductrice pour fixer une extrémité dudit élément d'accouplement (53) audit élément de capuchon (51), dans lequel ladite troisième résine électroconductrice est formée d'un mélange d'un polymère isolant et d'un produit parmi les poudres de carbone, les fibres de carbone et les fibres de métal.

10. Bouchon avec patte d'attache selon la revendication 8, **caractérisé par** un élément annulaire (59) engagé dans une périphérie extérieure dudit élément de capuchon (57), et par un élément de fixation (61) formé d'une troisième résine électroconductrice pour fixer une extrémité dudit élément d'accouplement (53) sur ledit élément annulaire (59), dans lequel ledit élément annulaire (59) est formé d'une quatrième résine électroconductrice, ladite troisième résine électroconductrice et ladite quatrième résine électroconductrice étant formée chacune d'un mélange d'un polymère isolant et d'un produit parmi les poudres de carbone, les fibres de carbone et les fibres de métal.

11. Bouchon avec patte d'attache selon l'une ou l'autre des revendications 8 et 10, **caractérisé en ce que** l'élément de capuchon (21) formé de la première résine électroconductrice possède une gorge annulaire (21d) formée dans sa périphérie extérieure, et **en ce que** l'élément d'accouplement allongé (23) formé de la seconde résine électroconductrice et étant flexible comprend un élément annulaire (23a) formé de manière intégrale à l'une de ses extrémités, une partie d'engagement (23b) qui est formée de manière intégrale avec une périphérie intérieure de ladite partie annulaire (23a) étant engagée en rotation dans ladite gorge annulaire (21d) dudit élément de capuchon (21), ledit bouchon avec patte d'attache (21) étant utilisé avec une autre extrémité dudit élément d'accouplement (23) accouplée à un véhicule.
